# EUROPEAN PATENT APPLICATION

(11) **EP 2 203 003 A2**
(43) Date of publication of application: **30.06.2010**
(21) Application number: 09179545.0
(22) Date of filing: 17.12.2009
(51) Int. Cl.: H04W 4/02

(54) **Location based mobile messaging method**

(30) Priority: 29.12.2008 TR 200809938
(71) Applicant: Arti Teknoloji-Bora Tayfun Sahinoglu Ibrahim Alagoz Kollektif Sirketi, 34398 Istanbul (TR)
(72) Inventor: Sahinoglu, Burc, 34398, Istanbul (TR); Erenis, Burak, 34398, Istanbul (TR)
(74) Representative: Dericioglu, E. Korhan

(57) **Abstract**

The present invention relates to a location-based mobile messaging method which enables storing the cell IDs in the server upon associating the message left by the mobile device with the location of the message within the network regardless of the coordinates of the base station and with the signal levels received by the mobile device at that moment, and which, when the signal levels of other mobile devices converge with the cell IDs, enables that the message is sent to these mobile devices.

## Description

### Field of the Invention

The present invention relates to a location based mobile messaging method, which enables a message left by the user at any geographical region to be transmitted when other users arrive at that region and which enables location based messaging.

### Background of the Invention

Messaging, which is one of the most important characteristics of mobile devices, is today one of the methods which are most used by users for communication. It is possible for mobile phones to send the messages written by the users to another user or a group of users via GSM line.

In addition to the systems in which the sent message is transmitted instantaneously, there are also applications like the message reaching within a certain period of time or the receiver receiving the message upon reaching the desired location. In these applications, there is provided a server wherein the message sent by the user is kept.

In many applications, registration is required in order for the server to recognize the user. In some applications, it is possible to communicate with the server and the other users by means of the software installed in the mobile device.

The message waiting in the server is transmitted when the user or users, to which the message will be conveyed, get involved into system. These types of applications generally operate with the geo-positioning method.

The Unites States patent document US 7200387**,** in the state of the art, discloses a method for location based reminder services. The server receives an invocation message from the user. The server transmits the invocation message to a gateway, which generates the message for the destination station and sends invocation message to the message center. The message includes the parameters that identify one or more applications that are resident on the mobile station. The mobile station comprises a receiver for receiving the messages coming from the communication network and a special processor for performing the location-based function.

The Chinese patent document CN 101073274**,** in the state of the art, discloses a location-based social software. There is provided a method for establishing communication between users of mobile devices. The method receives information regarding the location of the first user from the first mobile device, receives information regarding the second user from the second mobile phone, and sends a message to the first user taking into account the proximity in between them.

The Unites States patent document US 2008090557**,** in the state of the art, discloses a location based service network architecture. In cellular communications networks, text messages specific for a certain group of base stations at each instant, are broadcast to mobile terminals. Mobile terminals include a text message or a text derived based on at least the text message as a part of a position dependent service request data packet. The data packet is sent to a service provider. The included text is interpreted in the service provider or communication method.

The Unites States patent document US 6505046**,** in the state of the art, discloses distribution of location-based messages by means of a wireless communication network. Location of mobility origination message is derived by network processes and the network constructs advertisements based on that location. The coupon or the advertisement is sent to the user's handset. A retailer enters various advertisements or coupons into the network for transmission to subscribers who call a predefined telephone number.

In these methods, there may occur a decrease in the service quality of the operator due to the fact that the telephone is constantly at the operator network and engages in transactions. Additionally in the above mentioned applications, the location of the mobile phone is known and the message is sent by the server to this location.

### Summary of the Invention

The objective of the present invention is to realize a location based mobile messaging method which enables messaging without constantly remaining in the telephone operator network, scanning or decreasing the service quality of the operator.

Another objective of the present invention is to realize a location based mobile messaging method which enables messaging without knowing the physical location of the mobile phone but only by determining its location within the communication network.

A further objective of the present invention is to realize a location based mobile messaging method which enables messaging upon determination of the location of the mobile phone on the network.

Yet another objective of the invention is to realize a location based mobile messaging method which allows the message left by the user to be stored in the server and enables the other user to receive the message when she/he arrives at the appropriate region.

### Detailed Description of the Invention

The location based mobile messaging method realized to fulfill the objective of the present invention is illustrated in the accompanying figures, in which,

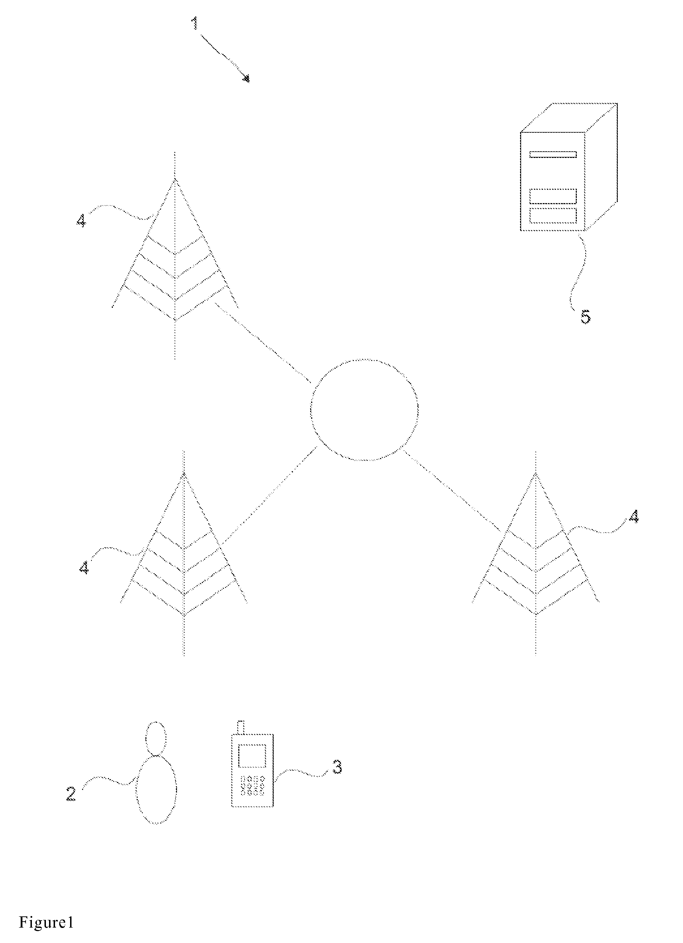

Figure 1 is the view of the stations from which the mobile device receives signal at the moment when the message is left.

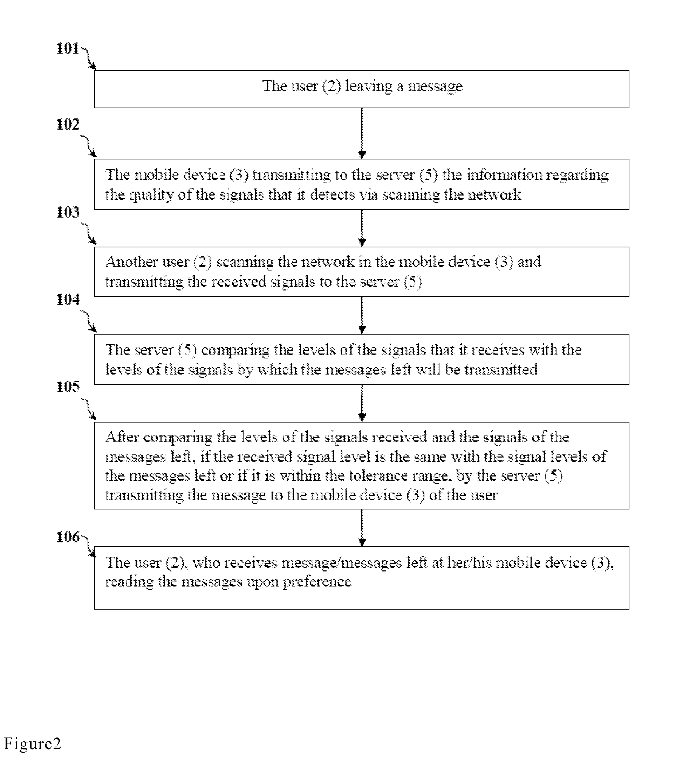

Figure 2 is the flowchart of the location based mobile messaging method.

The components given in the figures are individually numbered where the numbers refer to the following:
1. Location based mobile messaging method
2. User
3. Mobile device
4. Station
5. Server

The inventive mobile messaging method (1) essentially comprises
a user (2) who is registered to the method and uses the method,
at least one mobile device (3) enabling messaging,
at least one station (1) which sends signal to the mobile device (3) and which is connected to the telephone operator,
at least one server (5) where the messages are stored and the subscription details are kept.

The inventive mobile messaging method (1) comprises the steps of
- the user (2) leaving a message (101)
- the mobile device (3) transmitting to the server (5) the information regarding the quality of the signals that it detects via scanning the network (102),
- another user (2) scanning the network in the mobile device (3) and transmitting the received signals to the server (5) (103),
- the server (5) comparing the levels of the signals that it receives with the levels of the signals by which the messages left will be transmitted (104),
- after comparing the levels of the signals received and the signals of the messages left, if the received signal level is the same with the signal levels of the messages left or if it is within the tolerance range, by the server (5) transmitting the message to the mobile device (3) of the user (105),
- the user (2), who receives message/messages left at her/his mobile device (3), reading the messages upon preference (106).

The inventive location-based mobile messaging method (1) transmits to the server (5) the information about which stations (4) have at that moment detected the message sent by the user (2) and when another user enters into the coverage area of these stations (4), enables that the message is transmitted to the user (2) who has entered the said station coverage area.

In the inventive location-based mobile messaging method (1), when the user (2) leaves a message with her/his mobile device (3) anywhere that she/he is located, this message is transmitted to the server (5). The server (5) recognizes the member by whom this message is sent by means of the user number it has assigned to the member. The mobile device (3) is connected to the communication network when the message is being sent.

The mobile device (3) receives the cell identifications (ID) of the stations (4) sending signals and transmits these cell IDs to the server (5) according to the concerned signal levels. The server (5) stores the message information and the cell IDs of the stations (4) sending signals to the mobile device (3) at that moment at the area where the message is sent.

For example the station cell IDs read at the moment when the message is sent by the mobile device (3) can be as follows:

| Cell ID | Signal Power | User No | Message |
|---|---|---|---|
| 29756 | 119 | 15 | XXXXX |
| 31298 | 100 | 15 | XXXXX |
| 26857 | 105 | 15 | XXXXX |

In this case, the mobile device (3) receives signal from at least three stations (4) at the moment it leaves the message. The location of the message is associated with these signal powers and saved by the server (5).

When another user (2) or users (2) scan the network by means of their mobile device (3), the mobile device (3) reports to the server (5) the stations (4) that it receives signals from. The server (5) compares the values in the database with the values of the user. If there are converging values and if there are messages in these values, the server (5) sends the concerned message or messages to the mobile device (3).

There is a certain tolerance when the server (5) is comparing the signal levels received from the mobile device (3) and the signal levels at the database. The reason of this tolerance is that the signal levels constantly change. The said tolerance is preferably 10%. The signal level difference originating from the instant differences in the signal levels is eliminated by the help of this tolerance. Thus comparison of the signal levels will be performed within a certain range, without having a complete overlap. This provides a healthier message receiving process.

The present method (1) does not constantly keep the telephone operator network busy during its operation, whereby it does not lead to any failure or slowing down in the service of the operator. This way the network is not constantly scanned and unnecessary load is not created on the network. Instead, the mobile device (3) scans the network at certain intervals.

Thanks to the inventive location based mobile messaging method (1), it is not necessary to know the real coordinates of the stations (4). What matters is the location of the message in the signal network. The message is associated with the signals received by the mobile device (3) at the moment it is left.

The fact that the mobile device (3) does not constantly remain connected to the network will minimize the data traffic. This way the users will not experience a constant message receiving. The signal levels of the stations (4) in the closest vicinity of the coverage area of the mobile device are transmitted to the mobile device (3). The mobile device (3) warns the user (2) when the signal levels reach a certain level if there is a message in that signal level. The user (2) views the message if she/he desires. In this case, if desired, the load of the method (1) can be changed by also sending the signal levels of the stations which are not in close vicinity.

Within the framework of these basic concepts, it is possible to develop a wide variety of applications of the inventive location based mobile messaging method (1). The invention can not be limited to the examples described herein; it is essentially according to the claims.

## Claims

1. A location based mobile messaging method (1) comprising
a user (2) who is registered to the method and uses the method,
at least one mobile device (3) enabling messaging,
at least one station (4) which sends signal to the mobile device (3) and which is connected to the telephone operator,
at least one server (5) where the messages are stored and the subscription details are kept, and
**characterized by** the steps of
- the user (2) leaving a message (101)
- the mobile device (3) transmitting to the server (5) the information regarding the quality of the signals that it detects via scanning the network (102),
- another user (2) scanning the network in the mobile device (3) and transmitting the received signals to the server (5) (103),
- the server (5) comparing the levels of the signals that it receives with the levels of the signals by which the messages left will be transmitted (104),
- after comparing the levels of the signals received and the signals of the messages left, if the received signal level is the same with the signal levels of the messages left or if it is within the tolerance range, by the server (5) transmitting the message to the mobile device (3) of the user (105),
- the user (2), who receives message/messages left at her/his mobile device (3), reading the messages upon preference (106).

2. A location based mobile messaging method (1) as defined in Claim 1 **characterized in that** the mobile device (3) sends the message and when transmitting the message informs the server (5) about the cell IDs of the stations from which it receives signal.

3. A location based mobile messaging method (1) as defined in Claim 1 **characterized in that** the mobile device (3) sends the signal levels and the cell IDs to the server (5), the server (5) compares this with the database and if there is a message in the concerned criteria, sends this message to the mobile device (3) at that instant.

4. A location based mobile messaging method (1) as defined in any of the preceding claims **characterized in that** the mobile device (3) scans and connects to the network at certain intervals and minimizes data traffic.

5. A location based mobile messaging method (1) as defined in any of the preceding claims **characterized in that**, when a message is sent by the mobile device (3), the message is stored in the server (5) only upon being associated with the location of the message within the signal network at the time it is sent, without knowing the coordinates of the station (4) from which the signal is received.
